# EUROPEAN PATENT APPLICATION

(11) **EP 2 581 781 A1**
(43) Date of publication of application: **17.04.2013**
(21) Application number: 11306312.7
(22) Date of filing: 11.10.2011
(51) Int. Cl.: G02C 7/02, G02C 7/06

(54) **Method for assigning two ophthalmic lenses of progressive addition type to right and left eyes**

(71) Applicant: Essilor International (Compagnie Générale d'Optique), 94220 Charenton-le-Pont (FR)
(72) Inventor: Deldalle, Bénédicte, 94220 Charenton-le-Pont (FR); Jolivet, Valérie, 94220 Charenton-le-Pont (FR)
(74) Representative: Cabinet Plasseraud

(57) **Abstract**

A method for assigning two ophthalmic lenses of progressive addition type to right and left eyes of a wearer of said lenses comprises determining which one of the wearer's eyes is reference eye for contrast perception. Then, the reference eye so-determined is equipped with a lens optimized for far vision, and the other eye is equipped with a lens optimized for near vision. The binocular vision of the wearer is thus corrected, while unwanted astigmatism and optical distortions produced by the lenses are reduced.

## Description

The present invention relates to a method for assigning two ophthalmic lenses of progressive addition type to right and left eyes of a wearer.

In a known manner, progressive ophthalmic lenses used as spectacle eyeglasses are adapted for correcting both far vision and near vision for a presbyopic wearer. But such a progressive lens exhibits unwanted astigmatism and other optical aberrations out of far and near vision fields and a channel connecting these vision fields. Therefore, a design of the lens is commonly optimized for enlarging the far vision field, or the near vision field, or for obtaining a trade off between these field widths and the minimum amount of unwanted astigmatism out of them.

Document FR 2 704 327 discloses equipping one of the eyes of the wearer with an ophthalmic lens which is more specifically dedicated to far vision and his other eye with another ophthalmic lens which is more specifically dedicated to near vision. The vision conditions of the wearer are further improved in this way, due to a binocular effect which acts as virtually summing the far and near vision fields for both eyes. Indeed, it appears that the wearer automatically selects as sighting eye the one of his eyes which provides him with better vision quality when performing a vision task. This selected sighting eye may vary between a far vision task and a near vision task, thereby producing the virtual summing effect in binocular vision.

Document US 2005/0280775 further proposes a method for determining a pair of spectacle lenses intended for a wearer, with one of the spectacle lenses which is designed for far vision and the other one designed for near vision. This method comprises determining a main viewing task for the wearer, determining his lead eye, and then calculating the pair of spectacle lenses. The lens which is best designed for the main viewing task identified is assigned to the wearer's lead eye, and the lens assigned to the other eye is designed more specifically for another viewing task. For example, the main viewing task may be far vision, or near vision for book-reading, or staring at a workstation for example.

Then, one object of the present invention consists in proposing an easy-to-implement method for improving the binocular vision of a wearer of progressive addition type lenses.

To achieve this object and others, the invention proposes a new method for assigning two ophthalmic lenses of progressive addition type respectively to right and left eyes of a wearer, these lenses being intended to be worn simultaneously by the wearer for obtaining an ametropia-corrected binocular vision for him. The method comprises:
/1/ for both wearer's eyes, obtaining a first lens design or power value set which is optimized for far vision, and a second lens design or power value set which is optimized for near vision, with these first and second lens designs or power value sets being different from each other;
/2/ selecting one of the wearer's eyes for assigning to this selected eye the first lens design or power value set, and then assigning the second lens design or power value set to the other one of the wearer's eyes; and
/3/ producing the ophthalmic lenses according to the lens designs or power value sets which have been assigned respectively to the right and left wearer's eyes in step /2/.

According to the invention, step /2/ comprises itself:
/2a/ providing right and left reference lenses corresponding to far vision power values prescribed respectively for the right and left wearer's eyes, and then having the wearer observing a pattern with predefined contrast and spatial frequency features while the right and left wearer's eyes are equipped simultaneously and respectively with the right and left reference lenses, and the wearer describing what he is observing; then
/2b/ exchanging a first one of the right and left reference lenses with a first test lens corresponding to a first power increment added to the prescribed far vision power value of this first one of the reference lenses, and then having the wearer observing the pattern again while both wearer's eyes are equipped simultaneously and respectively with the first test lens and that of the reference lenses remaining after the lens exchange of current step /2b/, and the wearer describing what he is observing; then
/2c/ back from the completion of step /2a/, exchanging the other one of the right and left reference lenses with a second test lens corresponding to the first power increment added to the prescribed far vision power value of this other one of the reference lenses, and then having the wearer observing the pattern again while both wearer's eyes are equipped simultaneously and respectively with the second test lens and that of the reference lenses remaining after the lens exchange of current step /2c/; and the wearer describing what he is observing; then
/2d/ for an operator from the wearer descriptions, determining which one of steps /2b/ or /2c/ which causes a highest reduction in a pattern contrast perception, and indicating which one of the right and left wearer's eyes was equipped with the first or second test lens in the step /2b/ or /2c/, and then assigning the first lens design or power value set to the wearer's right or left eye thus indicated.

Thus, a method according to the invention operates by having the wearer testing his vision conditions and quality when using varying ophthalmic lenses. Therefore, the method may be rapid and easy-to-implement.

The method is based on the wearer's viewing task of observing a contrast pattern using both eyes simultaneously. Thus, it is based on binocular contrast perception.

The method implements altering the far vision correction for each eye successively with respect to the prescription set for this eye. Then it is determined which eye thus modified in correction causes the most important contrast reduction as experienced by the wearer. According to the invention, this eye is identified as the wearer's reference eye for the contrast perception viewing task, and it is equipped with a final lens optimized for far vision. The other wearer's eye is then equipped with a final lens optimized for near vision.

In case the operator determines that the wearer has not experienced any contrast perception reduction between steps /2a/ and /2b/ which differs significantly from that of between steps /2a/ and /2c/, or that the wearer has not experienced any contrast perception reduction between steps /2a/ and /2b/ and between steps /2a/ and /2c/ either, then the contrast perception viewing task may be replaced with another viewing task consisting in observing an alphanumeric character. This other viewing task implements vision acuity more specifically. Then, the wearer's reference eye for acuity viewing task may be equipped with the lens optimized for far vision. So the method of the invention may be completed with the following additional steps:
/2a'/ having the wearer observing at least one alphanumeric character while the right and left wearer's eyes are equipped again simultaneously and respectively with said right and left reference lenses, and the wearer describing what he is observing; then
/2b'/ having the wearer observing the alphanumeric character again while both wearer's eyes are lens-equipped as in step /2b/ but using a second power increment instead of the first power increment, and the wearer describing what he is observing, then
/2c'/ back from the completion of step /2a'/, having the wearer observing the alphanumeric character again while both wearer's eyes are lens-equipped as in step /2c/ but using the second power increment instead of the first power increment, and the wearer describing what he is observing; then
/2d'/ for the operator from the wearer descriptions, determining which one of steps /2b'/ or /2c'/ which causes a highest reduction in an acuity perception of the alphanumeric character, and indicating which one of the right and left wearer's eyes was equipped with the first or second test lens in the step /2b'/ or /2c'/, and then assigning the first lens design or power value set to the wearer's right or left eye thus indicated.

In case the operator is still not able to select one of the steps /2b'/ or /2c'/ for highest acuity perception reduction experienced by the wearer, or if the operator determines that the wearer has not experienced any acuity perception reduction between steps /2a'/ and /2b'/ and between steps /2a'/ and /2c'/ either, then the acuity perception viewing task may be replaced with a comfort test. For such comfort test, the wearer is not asked for a specified vision task, but he may look whatever he prefers in his environment without constraint on the vision distance or any other vision aspect. Then, the wearer's reference eye as resulting from the comfort test is equipped with the lens optimized for far vision. So the method of the invention may be further completed with the following additional steps:
/2b"/ having the wearer's eyes lens-equipped as in step /2b/ but using a third power increment instead of the first power increment; and
/2c"/ having the wearer's eyes lens-equipped as in step /2c/ but using the third power increment instead of the first power increment; then
/2d"/ for the wearer: selecting one of steps /2b"/ or /2c"/ which provides a least vision comfort; and
/2e"/ for the operator: indicating which one of the right and left wearer's eyes was equipped with the first or second test lens in the step /2b"/ or /2c"/ selected by the wearer, and assigning the first lens design or power value set to the wearer's right or left eye thus indicated.

Other features and advantages of the present invention will appear from the description hereafter of non-limitating implementation examples, referring to the figures appended hereto and now listed:
- figure 1 is a block diagram of a method according to the invention;
- figure 2 is a block diagram of an improvement of a method according to figure 1; and
- figure 3 is a block diagram of a further improvement of a method according to figure 2;

In these figures, same reference numbers used in different figures refer to same meanings.

The invention may be implemented for supplying a wearer with a pair of ophthalmic lenses, whatever the nature of these lenses, provided they are of progressive addition type. In particular, the ophthalmic lenses thus supplied may be contact lenses or spectacle eyeglasses. For illustration purpose, there is now described the supply of a pair of spectacle eyeglasses to a wearer.

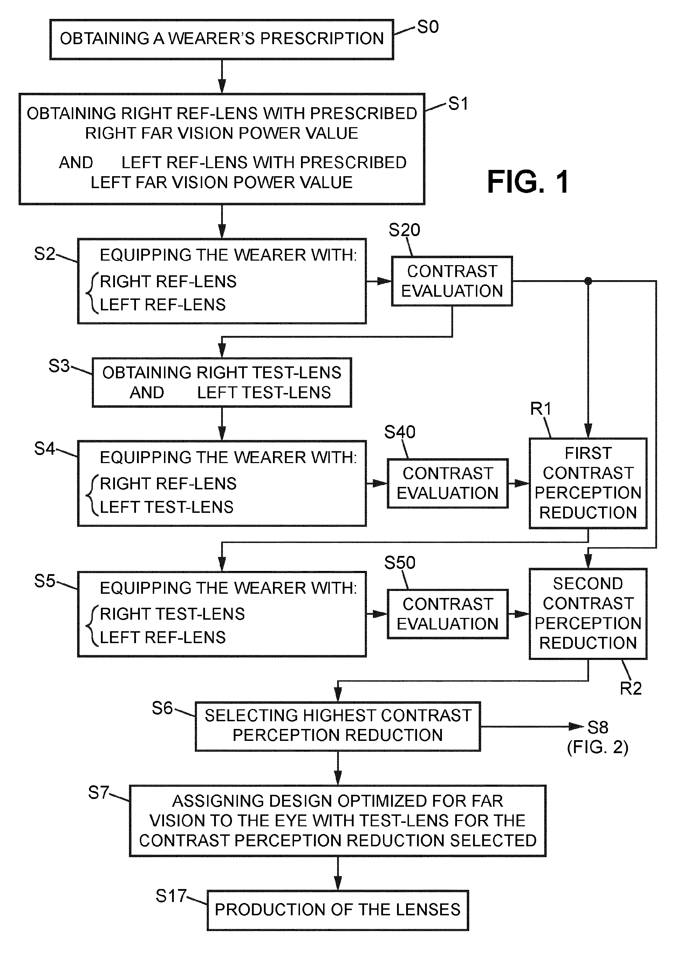

In accordance with step S0 in figure 1, an ophthalmic prescription is first obtained for the wearer, and it is assumed that the wearer is presbyopic. Therefore, for each one of the right and left wearer's eyes, the prescription specifies a far vision power value and a non-zero addition value. A near vision power value is then calculated for each eye by summing the addition value with the far vision power value for the same eye. Thus, four power values are obtained from the prescription for the wearer, which are:
- a prescribed right far vision power value,
- a prescribed right near vision power value,
- a prescribed left far vision power value, and
- a prescribed left near vision power value.

These far- or near vision power values are spherical power values. However, the ophthalmic prescription may also comprise an astigmatism value for each eye of the wearer. Preferably, all the lenses which are used for each one of the wearer's eyes may correspond to the astigmatism value prescribed for this eye.

Generally, the prescribed values for the right eye may differ from those for the left eye.

Then, in step S1, there are provided two reference lenses, denoted hereafter ref-lenses, which match the far vision power values prescribed for the wearer. Namely, a right ref-lens is provided which matches the prescribed right far vision power value, together with a left ref-lens which matches the prescribed left far vision power value. The near vision power values of the ref-lenses are not important for the invention. In particular, the ref-lenses may be unifocal lenses.

An ophthalmic spectacle frame is also provided, for maintaining the lenses appropriately on the wearer's face, while allowing easy exchange of any one of the ref-lenses with a test-lens.

In step S2, the wearer is equipped with both ref-lenses, correctly with respect to right and left eyes. He is then asked to observe a pattern with predefined contrast and spatial frequency features with both eyes simultaneously, for evaluating his perception contrast (step S20). Binocular vision is used for this contrast perception evaluation, with ophthalmic correction for both eyes suitable for far vision. Preferably, the pattern may be located during step S20 at a first distance from the wearer which is longer than 1 m (meter), more preferably longer than 2 m. Such first vision distance is consistent with the matching of the ref-lenses with the prescribed far vision power values.

Any pattern suitable for contrast perception evaluation and known in the art may be used in the invention method. Such pattern may be comprised of an array of base patterns with varying spatial frequency, varying contrast and variable inclination. For example the array may have five lines and nine columns, with a base pattern located at the crossing of each line and column. The base patterns may each be comprised of alternating dark and clear stripes with sine-like space-varying brightness. The stripe contrast may be decreased from one column to the next one, for example from left side to right side, and the stripe frequency may be increased, for example downwards within each column. In an actual implementation, the respective spatial frequencies of the pattern lines may be 1.5, 3, 6, 12 and 18 cycles per degree of vision angle, and the stripe contrast may divided by two from one column to the next one. Within each base pattern, the stripes are either tilted towards right side, or oriented vertically, or tilted towards left side. For example, the angle of the stripes with respect to vertical direction may be -15° (degree), 0 or +15°, depending on the base pattern currently observed.

The wearer is asked to observe some of the base patterns and to indicate which stripe orientation he perceives within this base pattern. An operator checks this orientation perceived and can thus assess the contrast perception of the wearer for the vision conditions currently implemented. For example, the test provides a curve in the plane with coordinates being stripe contrast and stripe frequency, corresponding to the stripe perception limit for the wearer. An average value for the contrast perception limit may be further calculated over the spatial frequencies of the base patterns. Such contrast perception test is well known to the Man skilled in ophthalmic optics. It has been developed by Dr. Arthur P. Ginsburg and is usually called "Functional Acuity Contrast Test".

In step S20, the contrast perception test is performed with the wearer equipped with both ref-lenses.

Then, in step S3, two test lenses are provided, which match the far vision power values prescribed for the wearer but further increased by a first power increment. They are denoted hereafter test-lenses. Thus, a right test-lens matches the prescribed right far vision power value added to the first power increment. Similarly, a left test-lens matches the prescribed left far vision power value also added to the first power increment. The near vision power values of the test-lenses are not important either for the invention. Thus, the test-lenses may be unifocal lenses too.

Preferably, the first power increment may be between 0.25 diopter inclusive and 0.75 diopter inclusive. For example, it may be equal to 0.50 diopter. Thus, when used by the wearer for the corresponding eye, each test-lens produces a defocusing of an image formed on the wearer's retina when looking at a far-located object.

Preferably, the first power increment may be constant for any direction parallel to each lens surface. Then it is of spherical power type. Alternatively, the first power increment may be different along two directions parallel to each lens surface and perpendicular to each other. In such cases, the first power increment is of toric type.

In step S4, the wearer is equipped with the right ref-lens for his right eye together with the left test-lens for his left eye. The contrast perception test is performed again, under same observing conditions and using binocular vision too. Put another way, step S20 is repeated after having replaced the left ref-lens with the left test-lens on the wearer's face. In particular, the pattern may be located at a same first distance from the wearer in steps S20 and S40. The new contrast perception of the wearer is evaluated (step S40) and compared with that of step S20 when he was using both ref-lenses simultaneously (step R1). Because of the first power increment producing a defocusing on his left retina, the wearer should experience a first contrast perception reduction when turning from step S20 to step S40.

Steps S5 and S50 correspond respectively to steps S4 and S40 for the wearer now equipped with the right test-lens for his right eye and the left ref-lens for his left eye. The pattern is displayed again to the wearer, preferably again at the first distance from him. When observing the pattern again, the wearer should experience a second contrast perception reduction (step R2), because the first power increment now produces a defocusing on his right retina.

The first contrast perception reduction (step R1) and the second contrast perception reduction (step R2) may not be identical, because one of the defocusing experiments has been produced for the wearer's reference eye, and not the other one. In step S6, the operator indicates which one of the first and second contrast perception reductions is more important. This one corresponds to the image defocusing produced for the wearer's reference eye. As a general rule, the wearer's reference eye is that equipped with a test-lens for the highest contrast perception reduction. Actually, steps S2 to S6 consist in determining the reference eye of the wearer for contrast evaluation viewing task in far vision condition.

The reference eye determination method which has just been described may be implemented with minor changes. In particular, steps S4 and S5 may be swapped, so that the wearer may not know which one of his right and left eyes is currently made defocused. The pattern used for contrast evaluation may be printed on a printing support or displayed on a screen using any displaying apparatus available. Alternatively, the pattern may be generated optically by a refractor apparatus, and the wearer observes the pattern by looking through an eyepiece of the refractor apparatus. Patterns other than that described previously may be used alternatively, with suitable contrast and spatial frequency.

In addition to the preceding steps, first and second lens designs are supplied for each one of the right and left wearer's eyes. Namely, there are thus supplied:
- a first lens design for the right eye, which is optimized for far vision,
- a second lens design for the right eye, which is optimized for near vision,
- a first lens design for the left eye, which is optimized for far vision, and
- a second lens design for the left eye, which is optimized for near vision.

For each one of the right and left wearer's eyes, the first and second lens designs may differ from one another in various ways.

According to a first implementation mode of the invention, the first lens design may have a larger far vision field than that of the second lens design, these far vision fields being measured along at least one of a vertical and horizontal directions for a use position of the lenses by the wearer.

According to a second implementation mode of the invention, for each one of the wearer's eyes, a far vision power value of the first lens design may be equal to the far vision power value prescribed for this eye, and a near vision power value of the same first lens design may be equal to the near vision power value prescribed for the same eye but decreased by a first addition decrement. Symmetrically, the far vision power value of the second lens design may be equal to the far vision power value prescribed for the eye of concern, but increased by a second addition decrement, and the near vision power value of this second lens design may be equal to the near vision power value prescribed for the same eye. Thus, for each one of the wearer's eyes, the addition value of the final lens which is supplied is decreased with respect to the prescribed addition value. Then, the first lens design which is assigned to the reference eye is arranged for matching the prescribed far vision power value. The second lens design which is assigned to the non-reference eye is arranged for matching the prescribed near vision power value. When using this second implementation mode, the first and second addition decrements may be each between 0.25 diopter inclusive and 0.75 diopter inclusive. For example, they may be equal to each other, and possibly to 0.50 diopter. Because the addition values which are actually produced by the final lenses supplied are reduced, the unwanted astigmatism and the optical aberrations or distortions which may be produced by these lenses are also reduced as a consequence.

In the whole invention, the first and second lens designs adapted respectively for far and near visions may be replaced with first and second power value sets for obtaining alternative implementation modes. Thus, two first power value sets may be obtained respectively for the right and left wearer's eyes, which are optimized for far vision each for the eye of concern. Similarly, two second power value sets may be obtained respectively for the right and left wearer's eyes, which are optimized for near vision each for a different one the wearer's eye. Within the context of the invention, a lens design is comprised of data relating to the whole optically useful lens area, or to sampling points distributed within the whole useful lens area. But power value sets may be comprised of power values dedicated to only a reduced part of the lens area. For example, a power value set may be the power variation profile along a meridian line of the lens. Such power value set may indeed cause the lens being optimized for far vision or near vision, for example depending on the location of a power increase threshold along the meridian line. Another possible power value set may be the power profile along a horizontal line contained in the lens surface, at a defined vision height through this lens. Indeed such other power value set determines the vision field width at the vision height considered. Once one such power value set is supplied, one skilled in ophthalmics knows how to extrapolate power values to the whole useful lens area, so as to define this latter completely.

In a preferred implementation of the invention, the power value sets may each comprise a far vision power value and an addition value for each one of the wearer's eyes, or equivalently a far vision power value and a near vision power value for each one of the wearer's eyes. In such case, the far vision power values of the first value sets for the right and left lenses may correspond to their respective prescribed far vision power values. Then, the near vision power values of the first value sets for the two wearer's eyes may correspond to their respective prescribed near vision power values but reduced by the first addition decrement. Symmetrically, the far vision power values of the second value sets for the right and left wearer's eyes may correspond to their respective prescribed far vision power values but increased by the second addition decrement. And the near vision power values of the second value sets for the two wearer's eyes may correspond to their respective prescribed near vision power values.

In step S7, the first lens design or power value set is assigned to the lens of the wearer's reference eye as this eye has been identified by using the method steps S0 to S6, also complying with right or left side for the lens use. Then, the second design is to be used for the lens intended to the other wearer's eye. Both lenses with their respective designs thus selected are then manufactured in step S17 using any lens production process known in ophthalmics.

Thanks to binocular vision behaviour with virtual vision field addition, the wearer equipped with progressive addition lenses designed according to the invention experiences good vision quality in both far and near vision conditions, together with reduced lens unwanted astigmatism and optical aberrations.

The following improvement of the invention applies when it is not possible for the operator to select in step S6 one of the first and second contrast perception reductions experienced in steps R1 and R2 respectively, as being higher than the other one. Then, the contrast evaluation test may be replaced by an acuity evaluation test. For such acuity evaluation test, the wearer is asked to read at least one alphanumeric character in varying successive conditions, and the operator checks that the reading is correct.

Acuity testing prints or displays as implemented at this stage of a method according to the invention replace the pattern used earlier in steps S20 to S50. For example, the contrast pattern is replaced by a set of alphanumeric characters. Possibility, the alphanumeric characters may have varying character size. Generally for acuity evaluation test, each alphanumeric character is preferably displayed at a distance from the wearer corresponding to far vision. For example, the alphanumeric characters may be displayed at a second distance from the wearer, which is longer than 1 m, preferably longer than 2 m.

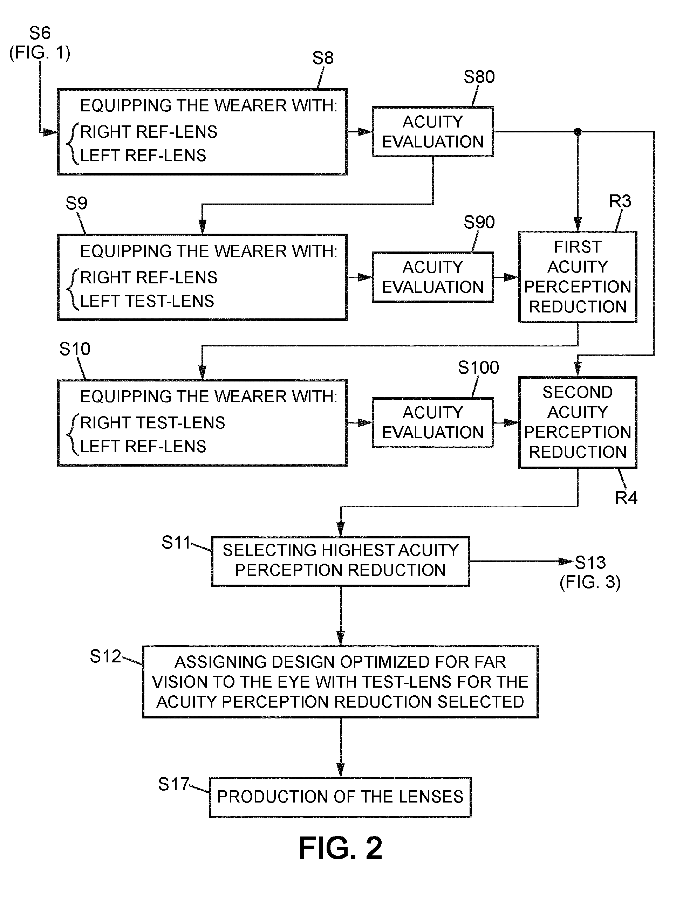

Steps S8 and S80 in figure 2 reproduce steps S2 and S20, adapted for acuity testing. The wearer is equipped again with both ref-lenses appropriately with respect to right and left eyes, and observes the characters 2 with both eyes simultaneously.

Then in step S9, the left ref-lens is replaced with a left test-lens, which matches the left far vision power value prescribed to the wearer in step S0 but increased by a second power increment. Step S90 is an acuity perception evaluation performed with the wearer so-equipped, so that the operator should assess in step R3 a first acuity perception reduction experienced by the wearer with respect to his acuity perception of step S80.

Thereafter in step S10, the left ref-lens is recovered by the wearer for his left eye, and the right ref-lens is replaced in turn with a right test-lens which matches the right far vision power value prescribed in step S0 but increased by the second power increment. Step S100 is the acuity perception evaluation for the wearer so-equipped, and step R4 is the assessment of a second acuity perception reduction with respect to the acuity perception evaluation of step S80.

The second power increment may also be between 0.25 diopter inclusive and 0.75 diopter inclusive, for example equal to 0.50 diopter. In particular, the second power increment may be equal to the first one. Then, the same test-lenses may be used for the acuity perception test of steps S9, S90, S10 and S100 as for the contrast perception test of steps S4, S40, S5 and S50.

Preferably, the second power increment may be constant for any direction parallel to each lens surface, so as to be of spherical power type. Alternatively, the second power increment may be different along two directions parallel to each lens surface and perpendicular to each other, so as to be toric.

Because of the reference eye for contrast evaluation, one of the first and second acuity perception reductions of steps R3 and R4 should be higher than the other one. Then the operator selects this higher acuity perception reduction in step S11. The first lens design is then to be assigned in step S12 to right or left wearer's eye which was equipped with the test-lens for the acuity evaluation step S90 or S100 having produced the highest acuity perception reduction. The second lens design is assigned to the other wearer's eye and the lenses can be produced with their respective designs thus assigned (step S17).

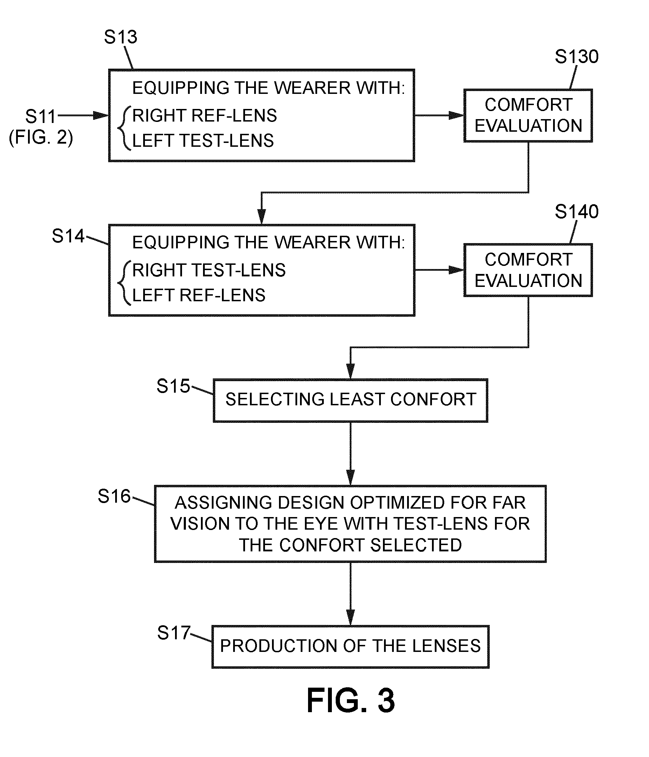

Figure 3 relates to further steps to be performed optionally when the operator cannot indicate in step S11 which one of the first and second acuity perception reductions is perceived by the wearer. Another possibility is that the operator determines that the wearer has not experienced any acuity perception reduction in both steps R3 and R4. Then, the design assignment may be based on a comfort sensation for the wearer. To this purpose, another pair of test-lenses may be provided, in a manner similar to the pair of first right and left test-lenses, but with a third power increment.

In step S13, the wearer may be equipped with one of the ref-lenses for one eye and with one of the test-lenses for the other eye, taking care to meet the right and left side use of each ref- and test-lens. Visual comfort is assessed by the wearer in step S130, without necessarily indicating a vision task to the wearer. A vision comfort sensation may only be searched for, which may not result from fixed observation but may result from varying vision distances.

Steps S14 and S140 correspond respectively to steps S13 and S130 respectively, swapping between the wearer's eyes for using ref-lens and test-lens, meeting again the right or left side use of each lens. The wearer assesses again his vision comfort, and indicates which one of the vision comforts assessed in steps S130 and S140 is the least one (step S15).

Then the first lens design which is optimized for far vision is assigned in step S16 to the wearer's eye which was equipped with test-lens for the least vision comfort assessed. The second lens design is assigned to the other wearer's eye. This lens design assignment is therefore adopted for the lens manufacture of step S17.

For this further improvement of the invention, the third power increment may be also between 0.25 diopter inclusive and 0.75 diopter inclusive. It may be of spherical power type or toric. In particular, the third power increment may be equal to the first one. Then, same test-lenses may be used again, for the comfort test of steps S13, S130, S14 and S140 as for the contrast perception of steps S4, S40, S5 and S50.

## Claims

1. Method for assigning two ophthalmic lenses of progressive addition type respectively to right and left eyes of a wearer, said lenses being intended to be worn simultaneously by the wearer for obtaining an ametropia-corrected binocular vision for said wearer, the method comprising:
/1/ obtaining a first lens design or power value set optimized for far vision for each one of the wearer's eyes, and a second lens design or power value set optimized for near vision for each one of said wearer's eyes, said first and second lens designs or power value sets being different from each other;
/2/ selecting one of the wearer's eyes for assigning to said eye the first lens design or power value set, and then assigning the second lens design or power value set to the other one of the wearer's eyes; and
/3/ producing the ophthalmic lenses according to the lens designs or power value sets assigned respectively to the right and left wearer's eyes in step /2/,
wherein step /2/ comprises itself:
/2a/ providing right and left reference lenses corresponding to far vision power values prescribed respectively for the right and left wearer's eyes, and then having the wearer observing a pattern with predefined contrast and spatial frequency features while the right and left wearer's eyes are equipped simultaneously and respectively with said right and left reference lenses, and the wearer describing what he is observing; then
/2b/ exchanging a first one of the right and left reference lenses with a first test lens corresponding to a first power increment added to the prescribed far vision power value of said first one of the reference lenses, and then having the wearer observing the pattern again while both wearer's eyes are equipped simultaneously and respectively with the first test lens and that of the reference lenses remaining after the lens exchange of said step /2b/, and the wearer describing what he is observing; then
/2c/ back from the completion of step /2a/, exchanging the other one of the right and left reference lenses with a second test lens corresponding to the first power increment added to the prescribed far vision power value of said other one of the reference lenses, and then having the wearer observing the pattern again while both wearer's eyes are equipped simultaneously and respectively with the second test lens and that of the reference lenses remaining after the lens exchange of said step /2c/, and the wearer describing what he is observing; then
/2d/ for an operator from the wearer descriptions, determining which one of steps /2b/ or /2c/ causes a highest reduction in a pattern contrast perception, and indicating which one of the right and left wearer's eyes was equipped with the first or second test lens in the step /2b/ or /2c/, and then assigning the first lens design or power value set to the wearer's right or left eye thus indicated.

2. Method according to Claim 1, wherein the ophthalmic lenses are contact lenses or spectacle eyeglasses.

3. Method according to Claim 1 or 2, wherein for each one of the wearer's eyes, the first lens design or power value set has a larger far vision field than a far vision field of the second lens design or power value set, said far vision fields being measured in at least one of a vertical and horizontal directions for a use position of said lenses by the wearer.

4. Method according to Claim 1 or 2, wherein a far vision power value of the first lens design or power value set is equal to the far vision power value prescribed for the corresponding wearer's eye, and a near vision power value of said first lens design or power value set is equal to a near vision power value prescribed for the corresponding wearer's eye but decreased by a first addition decrement, and
a far vision power value of the second lens design or power value set is equal to the far vision power value prescribed for the corresponding wearer's eye increased by a second addition decrement, and a near vision power value of said second lens design or power value set is equal to the near vision power value prescribed for the corresponding wearer's eye,
said first and second addition decrements each being between 0.25 diopter inclusive and 0.75 diopter inclusive.

5. Method according to any one of the preceding claims, wherein the power value set comprises a far vision power value and an addition value for each one of the wearer's eyes, or a far vision power value and a near vision power value for each one of said wearer's eyes.

6. Method according to any one of the preceding claims, wherein the first power increment is between 0.25 diopter inclusive and 0.75 diopter inclusive.

7. Method according to any one of the preceding claims, wherein the pattern is located at a first distance from the wearer longer than 1 m during steps /2a/ to /2c/.

8. Method according to any one of the preceding claims wherein, if the operator is not able to select one of the steps /2b/ or /2c/ for highest contrast perception reduction, or if the operator determines that the wearer has not experienced any contrast perception reduction between step /2a/ and either one of steps /2b/ and /2c/, then step /2/ further comprises the following steps:
/2a'/ having the wearer observing at least one alphanumeric character while the right and left wearer's eyes are equipped again simultaneously and respectively with said right and left reference lenses, and the wearer describing what he is observing; then
/2b'/ having the wearer observing the alphanumeric character again while both wearer's eyes are lens-equipped as in step /2b/ but using a second power increment instead of the first power increment, and the wearer describing what he is observing; then
/2c'/ back from the completion of step /2a'/, having the wearer observing the alphanumeric character again while both wearer's eyes are lens-equipped as in step /2c/ but using the second power increment instead of the first power increment, and the wearer describing what he is observing; then
/2d'/ for the operator from the wearer descriptions, determining which one of steps /2b'/ or /2c'/ causes a highest reduction in an acuity perception of the alphanumeric character, and indicating which one of the right and left wearer's eyes was equipped with the first or second test lens in the step /2b'/ or /2c'/, and then assigning the first lens design or power value set to the wearer's right or left eye thus indicated.

9. Method according to Claim 8, wherein the second power increment is between 0.25 diopter inclusive and 0.75 diopter inclusive.

10. Method according to Claim 8 or 9, wherein the alphanumeric character is displayed at a second distance from the wearer longer than 1 m during steps /2a'/ to /2c'/.

11. Method according to any one of claims 8 to 10 wherein, if the operator is not able to select one of the steps /2b'/ or /2c'/ for highest acuity perception reduction, or if the operator determines that the wearer has not experienced any acuity perception reduction between step /2a'/ and either one of steps /2b'/ and /2c'/, then step /2/ further comprises the following steps:
/2b"/ having the wearer's eyes lens-equipped as in step /2b/ but using a third power increment instead of the first power increment; then
/2c"/ having the wearer's eyes lens-equipped as in step /2c/ but using the third power increment instead of the first power increment; then
/2d"/ for the wearer: selecting one of steps /2b"/ or /2c"/ which provides a least vision comfort; and then
/2e"/ for the operator: indicating which one of the right and left wearer's eyes was equipped with the first or second test lens in the step /2b"/ or /2c"/ selected by the wearer, and assigning the first lens design or power value set to the wearer's right or left eye thus indicated.

12. Method according to claim 11, wherein the third power increment is between 0.25 diopter inclusive and 0.75 diopter inclusive.
